# EUROPÄISCHE PATENTSCHRIFT

(11) **EP 3 184 867 B1**
(45) Veröffentlichungstag und Bekanntmachung des Hinweises auf die Patenterteilung: **03.04.2019**
(21) Anmeldenummer: 16205084.3
(22) Anmeldetag: 19.12.2016
(51) Int. Cl.: F16K 31/06

(54) **KOAXIAL, DRUCKAUSGEGLICHEN, DIREKTGESTEUERT AUFGEBAUTES VENTIL MIT KASKADENANTRIEB**
COAXIAL, PRESSURE-EQUALISED, DIRECTLY CONTROLLED VALVE WITH CASCADE DRIVE
VANNE COAXIALE À COMMANDE DIRECTE, ÉQUILIBRÉE EN PRESSION COMPRENANT UN ENTRAÎNEMENT EN CASCADE

(30) Priorität: 22.12.2015 DE 102015016608
(43) Veröffentlichungstag der Anmeldung: 28.06.2017
(73) Patentinhaber: Müller, Friedrich, 74196 Neuenstadt (DE)
(72) Erfinder: Müller, Friedrich, 74196 Neuenstadt (DE)
(74) Vertreter: Lenzing Gerber Stute

(56) Entgegenhaltungen:
- DE-A1- 1 750 271
- DE-B4- 19 837 694
- US-A- 5 529 281

## Beschreibung

Zur Steuerung des Medienflusses in einer Rohrleitung werden Ventile eingesetzt. Nahezu alle Bauweisen der Ventile (Kugelhahn, Sitzventil, Schieber, Membranventil, Klappe) haben die Eigenschaft, dass die Betätigungskräfte des Schließorganes mit steigendem Druck innerhalb der Rohrleitung größer werden. Spätestens im abgesperrten Zustand der Ventile sorgt die höhere Druckdifferenz meist mindestens proportional für steigende Betätigungskräfte bzw. Betätigungsmomente. Am Beispiel eines Sitzventils erläutert bedeutet das, dass im Falle eines geschlossenen Ventils die Kräfte, die notwendig sind um den Kegel vom Sitz abzuheben, in etwa linear mit der steigenden Druckdifferenz steigen. Diese Kräfte lassen sich sehr einfach ermitteln, in dem die Fläche des Sitzkegels mal der Druckdifferenz genommen wird. Sehr ähnliche Verhältnisse herrschen ebenso in den anderen benannten Armaturenbauweisen wie Kugelhahn, Schieber etc. Diese Abhängigkeit der Schließkräfte ist insbesondere dann von Bedeutung, wenn ein solches Ventil magnetisch direktgesteuert betätigt werden soll.

Ein solches magnetisch betätigtes Ventil ist beispielsweise aus DE 17 50 271 bekannt. Das dort offenbarte Ventil weist eine Ventileinheit auf, in der durch einen Steuerschieber mehrere Zufluss- und Abflusswege in unterschiedlichen Schaltungen verschaltet werden können, und eine Ventilsteuerung, in der eine Steuerstange durch zwei elektromagnetisch betriebene Anker in mehrere mit Schaltzuständen des Steuerschiebers korrespondierenden Zwischenpositionen verschoben werden kann. Die Steuerstange ist dabei mit dem Steuerschieber gekoppelt. Während ein Anker fest an der Steuerstange gelagert ist, ist der andere Anker losgelagert und wirkt nur über einen Teil des möglichen Gesamthubs bis zu einer Zwischenstellung auf den Steuerschieber.

Spätestens bei Sitzdurchmessern bzw. Kegeldurchmessern von 20mm und mehr und Differenzdrücken von 40bar und mehr, werden die Kräfte bei einem solchen Ventil jedoch so groß, dass eine Betätigung des Sitzventils mittels eines Elektromagneten nur mit extrem hohen Leistungen möglich ist. Dies ist in der Regel
nicht vertretbar und so findet man nur wenige direktgesteuerte Hubventile oberhalb der DN25 oberhalb von PN25.

Trotzdem werden in vielen Fällen elektromagnetisch direktgesteuerte Ventile benötigt zum Beispiel in Einsatzfällen, wo keine Druckluft bzw. keine Hydraulik zur Verfügung steht. Eine elektrische Stromversorgung ist heutzutage an nahezu jeder Maschine bzw. Anlage verfügbar und so haben die elektrisch angesteuerten Magnetventile stets ihre Vorteile.

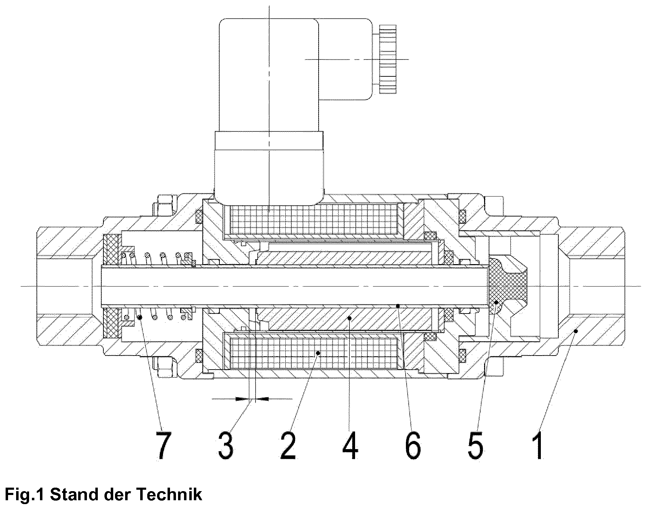

Seit ca. 50 Jahren ist die sogenannte coaxiale druckausgeglichene Bauweise von Ventilen im Markt verfügbar, wie in **Fig.1** dargestellt. So ist zum Beispiel die Firma müller co-ax ag aus Forchtenberg ein Hersteller, der Ventile herstellt, deren Betätigungskräfte nur rudimentär von den im Ventil herrschenden Drücken abhängen.

Ein innerhalb des Ventilkörpers **1** axial bewegliches Rohr, dient als Schließorgan **6** und wird üblicherweise als Steuerrohr bezeichnet, welches entlang der Steuerrohrachse hin und her bewegt wird mit Hilfe des fest mit dem rohrförmigen Schließorgan verbundenen Ankers **4** der korrespondierenden Magnetspule **2,** um den Medienfluss durch das Ventil regeln bzw. absperren zu können. Hierbei wird die Stirnseite des Steuerrohres **6** für ein Dichtschließen des Ventils, also das Absperren des Medienflusses gegen den Sitz **5** gepresst. Siehe z. Bsp. Patent: DE19837694 B4.

Da eine solche Bauweise nahezu perfekt druckausgeglichen ist, hängen die Betätigungskräfte des Steuerrohres nur sehr gering von den innerhalb des Ventils herrschenden Drücken ab.

Im Gegensatz zu einem üblichen Sitzventil bei dem der im Ventil herrschende Druck stets eine Kraft auf das Schließorgan entlang der Schließrichtung ausübt, so daß die Betätigungskräfte stets unmittelbar von dem im Ventil herrschenden Druck nahezu linear beeinflußt werden, ist dies bei dem koaxial aufgebauten Ventil nach **Fig.1** anders. Im Ventil nach **Fig.1** wirkt der Druck unabhängig von der Einbaurichtung stets radial auf die Wandungen des Steuerrohres und damit senkrecht zu der Betätigungsrichtung des Schließorgans **6**. Die innerhalb des so aufgebauten Ventiles herrschenden Druckverhältnisse haben nahezu keinen Einfluß auf die Betätigungskräfte des Schließorgans **6**. Im Wesentlichen sind zur Betätigung eines solchen Ventils lediglich die in den dynamischen Dichtungen, die zur Abdichtung des Steuerrohres nach außen dienen, entstehende Reibungskräfte zu überwinden. Diese Bauweise erlaubt es Ventile mit kleinen Betätigungskräften für hohe Drücke auch in großen Nennweiten aufzubauen. Solche coaxial aufgebauten, druckausgeglichenen, direktgesteuerten, elektromagnetisch betätigten Ventile sind bisher in der gezeigten Bauweise hergestellt worden, wobei der Antrieb, der zur Betätigung des Steuerrohres notwendig ist, coaxial um das Steuerrohr herum aufgebaut wird. Das gesamte Ventil ist im Wesentlichen coaxial aufgebaut.

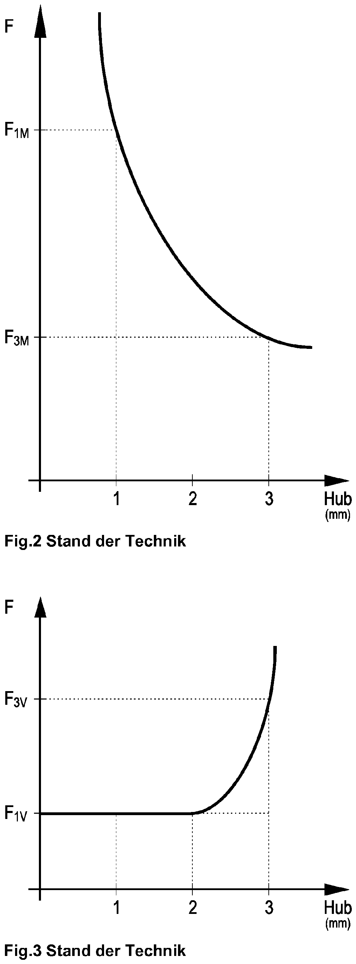

Ein üblicher Magnet für solche coaxial aufgebauten Ventile hat üblicherweise eine stark nicht lineare Kennlinie für die Kraft (F) als Funktion des Hubes 3, die in etwa hyperbolisch verläuft. Wie aus **Fig.2** ersichtlich, ist die Kraft eines solchen Magneten um ein vielfaches höher, wenn der Magnet fast komplett angezogen ist und der Hub **3** klein ist. In der **Fig.2** ist eine beispielhafte Kennlinie eines solchen Magneten aufgezeichnet. Es ist sofort ersichtlich, dass die Kraft des Magneten bei einem Hub von 3 mm wesentlich kleiner ist als wenn der Anker **4** nur 1 mm von seinem Anschlag entfernt ist.

Im Folgenden wird das Prinzip anhand dieses Beispieles mit diesem hypothetischen, aber für eine Nennweite 10mm üblichen Hub erläutert. Es ist selbstverständlich daß dieses Prinzip auf Ventile mit Magneten mit beliebigen Hüben erweiterbar ist.

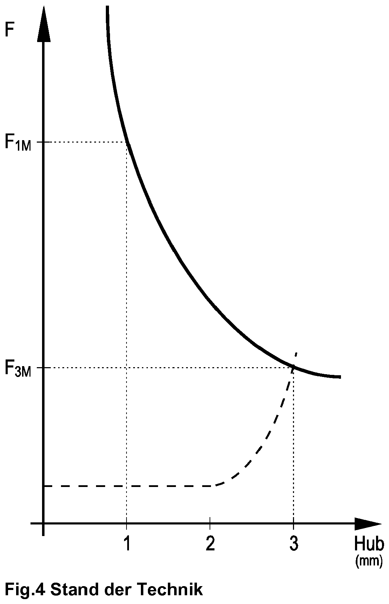

Marktüblich werden Ventile hergestellt, deren Magnete stets eine wesentlich größere Kraft besitzen, als das Schließorgan **6** über den größten Anteil des Hubweges benötigt. Lediglich in einem einzigen Punkt hat der Magnet eine Kraft, wie sie das Schließorgan **6** tatsächlich benötigt. Im hier dargestellten Beispiel ist dies in der geschlossenen Stellung des Ventiles bei Hub = 3mm der Fall, wie in **Fig.4** dargestellt. Ohne Einfluß auf den hyperbolischen Verlauf der Kennlinie nehmen zu können werden Ventile mit den marktüblichen Magneten in der Offenstellung bei Hub = 0mm offengehalten, deren Kraft und auch Leistung in diesem Betriebspunkt weit über dem erforderlichen Bedarf liegt.

Hinzu kommt, dass der Kraftbedarf in einem üblichen Ventil gerade in der geschlossenen Stellung (Hub = 3 mm) am höchsten ist **Fig.3****.** In aller Regel ist bei einem geschlossenen Ventil die Druckdifferenz am Sitz **5** am höchsten, wenn das Ventil geschlossen ist. Gleichzeitig sind alle Dichtungen mit dem höchsten Druck an das Schließorgan **6** angepresst, so dass der Effekt der höheren Haftreibung zum Tragen kommt. Der Kraftbedarf beim Hub vom 3 mm ist wesentlich höher als der Kraftbedarf, wenn das Ventil fast oder vollständig geöffnet ist (Hub = 0 mm).

Aus US 5 529 281 ist ein elektromagnetisch betriebenes coaxiales Ventil bekannt, bei dem vor und hinter dem Anker jeweils ein Polteil sowie pro Polteil eine korrespondierende Spule vorgesehen ist. Die jeweilige Spule bildet mit dem jeweiligen Polteil und dem Anker einen Magnetkreis, wenn die Spule bestromt ist, so dass der Anker zum jeweiligen Polteil hingezogen wird. Der Anker ist dabei kürzer als der Abstand zwischen den Polteilen. In den Endstellungen des Ankers werden beide Spulen stromlos geschaltet und ein Permanentmagnet hält den Anker an dem Polteil, zu dem er den kürzeren Abstand hat. Nachteilig muss bei dieser Lösung der Permanentmagnet so groß dimensioniert werden, dass er das Schließorgan im offenen und geschlossenen Zustand halten kann und die Elektromagneten müssen so groß dimensioniert werden, dass sie gegen den Permanentmagneten und die Reibkräfte das Schließorgan schließen bzw. öffnen können.

Es besteht also Bedarf nach einer konstruktiven Lösung die es ermöglicht Ventile aufzubauen, die magnetisch in der geschlossenen Stellung des Ventiles eine ausreichende Kraft auf das Schließorgan **6** aufbringen können, ohne die Größe und die Leistung des Magneten im weiteren Hubverlauf hyperbolisch zu steigern. Idealerweise würde die Kraft = f(Hub) Kennlinie des Magneten **Fig.2** analog der Kraft = f(Hub) Kennlinie des Schließorganes **6** wie in **Fig.3** dargestellt, verlaufen.

Die generelle Überlegung besteht darin, den oder die Magnete so auszulegen und so einzubauen, dass sie im optimalen sprich kraftvollsten Bereich ihrer Kennlinie arbeiten können. Wenn es also gelingen würde, einen Magneten bei einem Hub von 1 mm arbeiten zu lassen, während der Kraftbedarf des Schließorgans **6** am höchsten ist, könnten die Magnetkräfte wesentlich höher sein, als bei den im Markt üblichen Lösungen, ohne die Leistung und die Größe des Magneten proportional zu erhöhen.

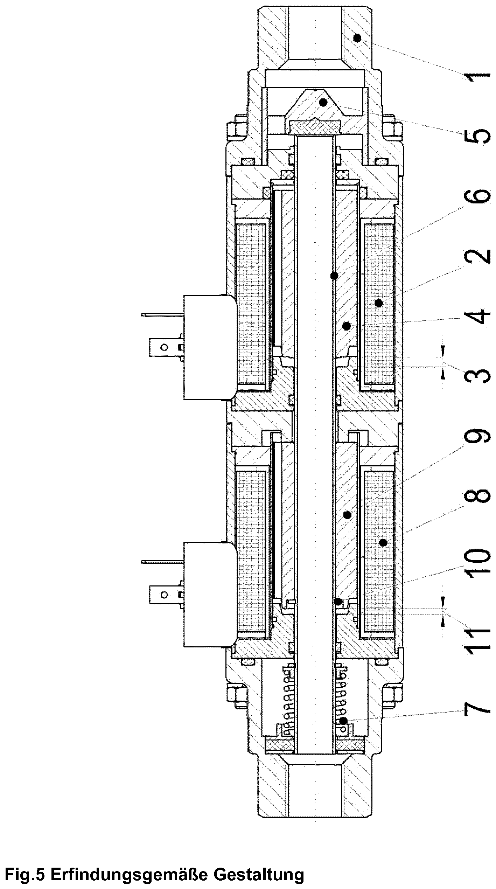

Erfindungsgemäß gemäß **Fig.5** wird das Ventil analog aufgebaut wie die heute im Markt üblichen Ventile. Der wesentliche Unterschied besteht darin, dass zwei oder mehrere Magnete gleichzeitig, auf das Schließorgan **6** wirken können.

In der **Fig.5** ist ein beispielhafter Aufbau eines solchen Ventiles am Beispiel eines federschließenden Ventiles dargestellt. Das Ventil wird durch Federkraft geschlossen, wenn durch die Spule(n) **2, 8** kein Strom fließt. Analog lassen sich Ventile aufbauen, die federöffnend sind.

Aus **Fig.5** ist ersichtlich, dass der rechte Bereich **(Bezugszeichen 1-6)** des erfindungsgemäß aufgebauten Ventiles im Wesentlichen identisch ist mit den marktüblichen Ventilen gemäß **Fig.1****.** In dem erfindungsgemäß aufgebauten Ventil ist aber zusätzlich zu der Spule **2** und zu dem Anker **4**, der auf dem Schließorgan **6** befestigt ist, noch eine weitere Spule **8** aufgebaut und ein weiterer Anker **9** ist um das Schließorgan **6** herum angeordnet. Während der (marktübliche) Anker **4** mit dem Schließorgan **6** fest verbunden ist, in der Regel durch Kleben, Löten oder ähnliche Maßnahmen, ist dies bei dem auf der rechten Seite des erfindungsgemäß aufgebauten Ventiles ebenso der Fall. Im Gegensatz dazu ist der auf der linken Seite des Ventiles vorhandene Anker **9** auf dem Schließorgan **6** beweglich angeordnet und nur durch einen geeigneten Mitnehmer **10** (z.B. Sicherungsring) in seinem Bewegungsbereich entlang des Schließorganes **6** beschränkt.

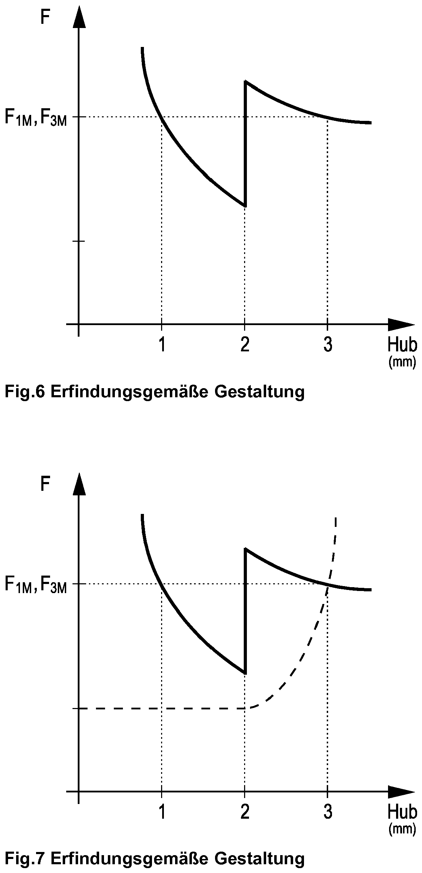

Wenn ein solches Ventil geschlossen ist und beide Magnetspulen **2, 8** durch Stromfluss erregt werden, wirken durch beide Spulen Kräfte auf beide Anker **4, 9.** Der Anker **4** des rechten marktüblich aufgebauten Magneten ist dabei auf einen Hub von 3 mm eingestellt. Der linke Anker **9** des erfindungsgemäß aufgebauten Ventiles ist dagegen in der Stellung des Hubes von 1 mm. Die Kräfte der beiden Anker summieren sich gemäß **Fig.6****.** Das Schließorgan **6** des Ventiles wird durch die Kräfte, die auf die Anker **4, 9** wirken, geöffnet und nachdem das Schließorgan **6** um 1 mm vom Sitz **5** abgehoben hat, gelangt der linke Anker **9** des erfindungsgemäß aufgebauten Ventiles an den Anschlag innerhalb der Spule **8.** Dieser Anker **9** wirkt ab jetzt nicht mehr auf das Schließorgan **6** und nur noch die Kräfte des rechten marktüblich aufgebauten Ankers **4** wirken auf das Schließorgan **6.** Dadurch, dass das Schließorgan **6** beweglich innerhalb des linken Ankers **9** angeordnet ist, kann das Schließorgan **6** durch die Kräfte des marktüblich aufgebauten Ankers **4** weiter geöffnet werden.

Wie vorteilhaft diese Erfindung auf die Kräfte innerhalb des Ventiles sind, wird durch **Fig.6** verdeutlicht. Darin ist die Kraftkennlinie der gemeinsam wirkenden Anker **4, 9** als Funktion des Hubes dargestellt. Bei der Stellung des Schließorganes im Hubbereich 2 - 3 mm ist die auf das Schließorgan wirkende Kraft wesentlich höher, als dies der Fall wäre, wenn die Magnetkraft eines der beiden Magnete lediglich verdoppelt worden wäre bei einem Hub von 3mm. In **Fig. 7** ist die Kraft - Kennlinie der erfindungsgemäß aufgebauten Magnetanordnung und die Kennlinie des Kraftbedarfes des Schließorgans **6** gemeinsam als Funktion des Hubes dargestellt. Beim Vergleich der **Fig.4** und **Fig.7** wird deutlich, dass die Kraft - Verhältnisse wesentlich günstiger sind, als wenn man die Anordnung marktüblich mit nur einer Spule und nur einem Anker aufgebaut hätte. Die Leistung des marktüblich aufgebauten Magneten wäre wesentlich größer, als die der beiden Magnete gemäß des erfindungsgemäßen Aufbaus.

Analog ist es möglich Ventile aufzubauen, bei denen drei oder noch mehr Anker auf das Schließorgan **6** wirken. Analog wäre bei geschlossener Stellung des Ventils ein fest auf dem Schließorgan **6** befestigter Anker bei einem Hub von 3mm, ein zweiter Anker wäre in der gleichen Stellung bei einem Hub von 2mm und ein dritter Anker wäre in der gleichen Stellung bei einem Hub von 1mm. Analog läßt sich die Anzahl der Anker beliebig erweitern.

Die erfindungsgemäße Ausführung erlaubt es ebenfalls eine oder mehrere Spulen bei geöffneter Stellung des Ventiles (Hub = 0) abzuschalten um den Strombedarf und auch die Wärmeentwicklung noch weiter zu minimieren. Hierzu könnte man z.B. eine simple, zeitlich begrenzte Ansteuerung der Spulen nutzen. Um ein Ventil zu öffnen würden alle Spulen angesteuert werden. Das Ventil würde öffnen, was bei dieser Bauweise der coaxial aufgebauten Ventile in der Regel nur Bruchteile einer Sekunde dauert (typisch 100ms). Nach einer frei wählbaren Zeit (z.B. nach einer Sekunde) würde eine oder mehrere Spulen abgeschaltet um den Energiebedarf zu minimieren. Hierzu könnte eine ganz einfache Zeitverzögerungsschaltung innerhalb des Ventils eingebaut sein, oder die Steuerung der einzelnen Spulen könnte extern erfolgen.

Mit der erfindungsgemäßen Ausführung ist es ebenso denkbar Ventile herzustellen, die nicht nur eine reine AUF/ ZU Funktion ausführen, wie marktübliche. Durch entsprechende Auswahl der Federn und der Magnete kann man durch die Ansteuerung einzelner oder gleichzeitig mehrerer Spulen, verschiedene Zwischenstellungen des Schließorganes **6** anfahren. Dies kann z.B. dazu genutzt werden, um Füllvorgänge effizienter zu ermöglichen. Eine volle Öffnung des Ventiles kann für das schnelle Füllen genutzt werden, eine Zwischenstellung könnte dazu genutzt werden, um mit kleiner Strömungsgeschwindigkeit genaues Dosieren zu ermöglichen.

Analog könnte man mit der erfindungsgemäßen Gestaltung dynamische Schließschläge beim Schließen der Ventile vermeiden. Das Schließorgan **6** würde schnell bis kurz vor dem Schließen geschlossen werden, dadurch würde die Strömungsgeschwindigkeit des durch das Schließorgan fließenden Mediums abgebremst werden und erst im zweiten Schritt würde das Ventil vollständig geschlossen werden.

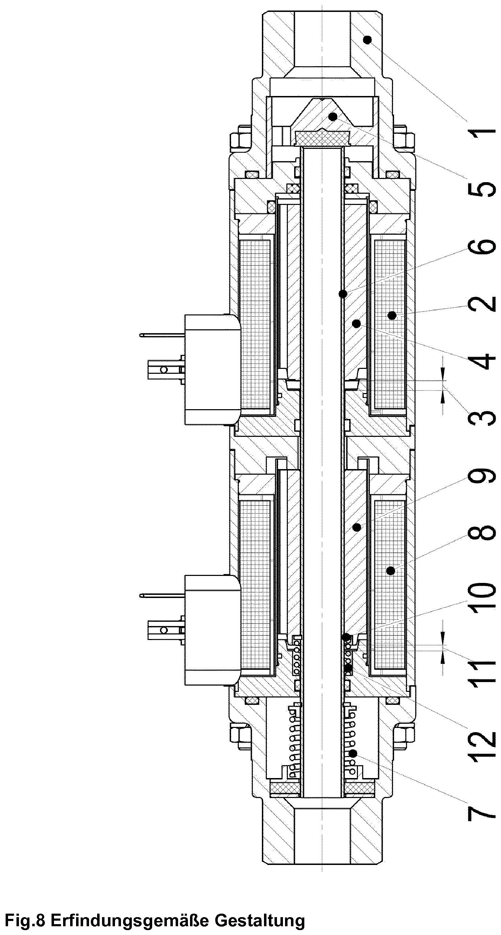

Mit nur einer Feder könnte dieser Vorgang Ungenauigkeiten hervorrufen, je nach Federkennlinie, Federtoleranzen, schwächeres Magnetfeld wegen Unterspannung, Spulenerwärmung etc. Hierzu wäre es zwar aufwendiger, aber wesentlich verläßlicher wenn zumindest einer der Magnete eine zusätzliche eigene Feder besitzen würde. Es könnte auch jeder Magnet über eine eigene Feder verfügen. So könnte eine exakte Positionierung für jede Stellung stets gewährleistet werden. **Fig.8** zeigt schematisch eine erfindungsgemäße Anordnung. Eine zweite Feder **12** wird am Anker **9** angebracht. Vorzugsweise sollten die Federn so gewählt werden, daß sie auch unter ungünstigsten Umständen (Federtoleranz, Erwärmung des Magneten, Unterspannung, etc.) von den Ankern **4,9** überwunden werden können. Auch hier läßt sich die erfindungsgemäße Gestaltung analog auf beliebig viele Magnete übertragen. Als Beispiel sei erwähnt, daß ein Aufbau mit drei Magneten wobei jeder Magnet über eine eigene Feder verfügt, es erlauben würde vier Positionen: Stellung Zu und drei exakte Zwischen - Positionen des Ventiles anzusteuern.

Der Mitnehmer **10** kann auf verschiedenste Weisen ausgeführt werden. Sei es der hier vorgestellte Sicherungsring, sei es durch einen Absatz im Schließorgan **6**, einen verstifteten Ring, etc.

Das Steuerrohr muß stets mediumsberührt ausgeführt werden, um den Druckausgleich zu erreichen, bei hohen Mediumstemperaturen sollte die Mediumstemperatur den Magneten trotzdem nicht direkt aufheizen.

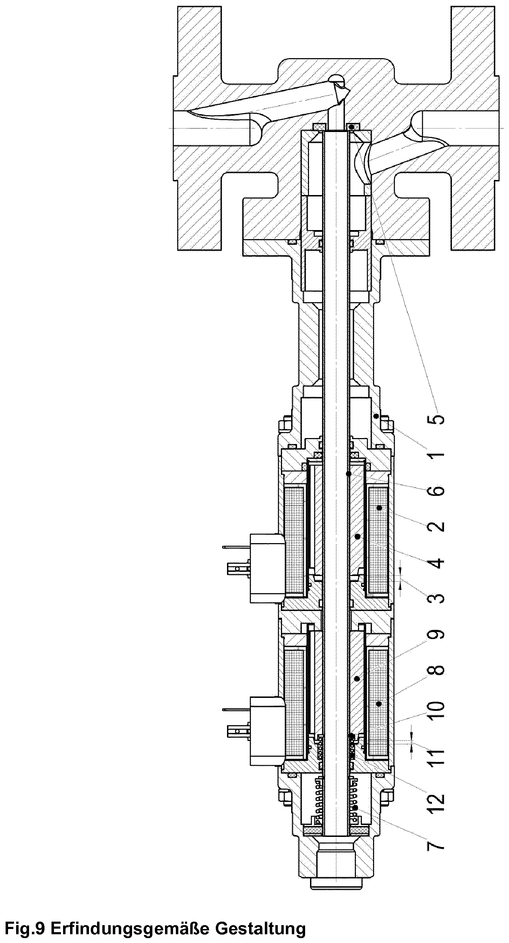

Im Gegensatz zu der üblichen Bauweise solcher Ventile, wird in der erfindungsgemäßen Konstruktion gemäß **Fig.9** der Mediumsdurchsatz nicht durch das Schließorgan **6** geführt. Im Gegenteil dazu wird das Medium seitlich am Schließorgan **6** vorbeigeführt. In dem nach dem Stand der Technik aufgebauten Ventil wird der Hauptmediumsstrom im wesentlichen mitten durch das Schließorgan **6** geführt, während in der erfindungsgemäßen Lösung gemäß **Fig.9** das Medium im wesentlichen nur um ein Ende des Schließorgans **6** herum geführt wird. In der Lösung nach dem Stand der Technik wird das Schließorgan **6** durchströmt, in dem erfindungsgemäß aufgebauten Ventil wird lediglich ein Ende des Schließorgans **6** umspült.

Durch eine bei Bedarf angebrachte Verengung im Steuerrohr wird für sehr hohe Temperaturen zusätzlich sichergestellt, daß der Mediumsdurchsatz durch das Schließorgan **6** (das Steuerrohr) auf ein Minimum begrenzt wird. Der Mediumdurchsatz durch das Schließorgan **6** ist nahezu Null, lediglich der Druckausgleich bei sich änderndem Mediumsdruck wird durch die Verengung erfolgen. Auf jeden Fall beträgt der Mediumsdurchsatz durch das Schließorgan **6** nur einen kleinen Bruchteil der Durchflußmenge die durch durch das Schließorgan **6** des bisher marktüblich aufgebauten Ventiles fließt. Dies ist erforderlich, um keine Temperaturerhöhung der Magnetspule durch ein heißes Medium befürchten zu müssen.

Gleichzeitig wird das Schließorgan **6** und das Gehäuse **1** erfindungsgemäß soweit verlängert, daß die Temperatur an der Spule im zulässigen Bereich liegt.

Ebenso werden erfindungsgemäß die dynamischen Dichtungen, die fast zwangsläufig aus Polymeren bestehen, aus dem Bereich der hohen Temperaturen herausgehalten und in dem Ventilbereich installiert, in dem keine hohen Temperaturen mehr herrschen.

Erfindungsgemäß werden lediglich Führungen, die vorzugsweise aus Polymeren bestehen, die aber auch aus Metallen oder anderen Lagerungswerkstoffen, wie Graphit bestehen können, dort im Ventil verbaut, wo das heiße Medium für hohe Temperaturen sorgt. Alle weiteren Bauteile, die temperaturempfindlich sein könnten, werden in dem der hohen Temperatur abgewandten Teil des Ventils untergebracht.

Ein weiterer Vorteil des erfindungsgemäß aufgebauten Ventiles besteht darin, daß keine dynamischen Dichtungen "nach außen" abdichten. Eine Leckage nach Außen wird durch zusätzliche, statische Dichtungen verhindert, wie z.B. O-Ringe. Diese O-Ringe können aus Polymeren, PTFE oder rein metallisch ausgeführt sein. So führt auch ein vollständiges Versagen einer dynamischen Dichtung nicht zu einer Leckage außerhalb des Ventiles.

## Patentansprüche

1. Absperrventil zur steuerbaren Fluiddurchströmung, wobei das Ventil über ein Schließorgan (6) verfügt, welches im Wesentlichen die Gestalt eines hohlen, runden Rohres besitzt und welches Schließorgan (6) zur Absperrung des Mediumsstroms axial entlang der Achse des Schließorgans (6) innerhalb des Ventilkörpers (1) verschoben wird und zur Mediumsstromabsperrung stirnseitig gegen einen Sitz (5) gepreßt wird, so daß im abgesperrten Zustand des Ventiles die Druckdifferenz im Wesentlichen radial auf die Wandung des rohrförmigen Schließorganes (6) wirkt und wobei das Schließorgan (6) mit einem Hubantrieb direkt betätigt wird, der im Wesentlichen coaxial um das Schließorgan (6) herum angeordnet ist und wobei der Hubantrieb elektromagnetisch und direkt gesteuert erfolgt, **dadurch gekennzeichnet, dass** der Hubantrieb aus mindestens zwei Ankern (4, 9) besteht und einer oder mehreren dazu korrespondierenden Spulen (2, 8) und wobei sowohl die Anker (4, 9) als auch die Spulen (2, 8) im wesentlichen coaxial um das Schließorgan (6) angeordnet sind und wobei die zwei oder mehrere Spulen (2, 8) einzeln mit Strom erregt werden können und mindestens ein Anker (4, 9) fest mit dem Schließorgan (6) verbunden ist.

2. Absperrventil nach dem vorhergehenden Anspruch **dadurch gekennzeichnet, daß** die verschiedenen Magnete nicht baugleich aufgebaut sind, oder daß zumindest die Anker (4, 9) innerhalb des korrespondierender Spulen unterschiedliche Hübe haben

3. Absperrventil nach einem oder mehreren der vorhergehenden Ansprüche **dadurch gekennzeichnet, daß** ein oder mehrere oder alle der Anker (4, 9) verschiebbar auf dem Schließorgan (6) angeordnet ist.

4. Absperrventil nach einem oder mehreren der vorhergehenden Ansprüche **dadurch gekennzeichnet, dass** ein oder mehrere der Anker (4, 9) in ihrer Bewegung entlang des Schließorgans (6) durch einen mit dem Schließorgan (6) unverschiebbar verbundenen Mitnehmer (10) begrenzt sind.

5. Absperrventil nach einem oder mehreren der vorhergehenden Ansprüche **dadurch gekennzeichnet, dass** innerhalb des Ventils mehr als eine Feder (7, 12) angebracht ist, die direkt, oder über geeignete Mitnehmer auf das Schließorgan (6) entlang der Längsachse desselben einwirken.

6. Absperrventil nach dem vorhergehenden Anspruch **dadurch gekennzeichnet, dass** die Federn (7, 12) auf das Schließorgan in Richtung des Sitzes (5) wirken.

7. Absperrventil nach einem oder mehreren der vorhergehenden von Anspruch 5 abhängigen Ansprüche **dadurch gekennzeichnet, dass** die Federn (7, 12) auf das Schließorgan in Richtung vom Sitz (5) weg wirken.

8. Absperrventil nach einem oder mehreren der vorhergehenden Ansprüche, **dadurch gekennzeichnet, dass** im Gebrauch eine oder mehrere der Spulen (2, 8) durch eine zum Absperrventil gehörende Zeitverzögerungsschaltung nach einer fest definierten Zeit nach erfolgter Erregung vom Stromzufluß getrennt werden.

9. Absperrventil nach einem oder mehreren der vorhergehenden von Anspruch 5 abhängigen Ansprüche **dadurch gekennzeichnet, dass** die Feder(n) (7, 12) so auf die Kraft des (der) Anker(s) (4, 9) abgestimmt ist, daß der zur Feder korrespondierende Anker (9) auch unter ungünstigsten Bedingungen die Federkraft überwinden kann und daß dieser Anker (9) über einen kleineren Hub (11) verfügt, als der maximale Hub des Schließorgans (6) und so bei Erregung der zum Anker (9) korrespondierenden Spule (8) eine Zwischenstellung des Schließorgans (6) angefahren werden kann.

10. Absperrventil nach einem oder mehreren der vorhergehenden von Anspruch 5 abhängigen Ansprüche **dadurch gekennzeichnet, dass** analog zu Unteranspruch 9 mehrere Federn (12) so auf die Kraft der korrespondierenden Anker (9) abgestimmt sind, daß der zur Feder korrespondierende Anker auch unter ungünstigsten Bedingungen die Federkraft der korrespondierenden Feder überwinden kann und daß diese Anker (9) über einen kleineren Hub (11) verfügen, als der maximale Hub des Schließorgans (6) und so bei Erregung der zu den Ankern (11) korrespondierenden Spulen (8) mehrere Zwischenstellungen des Schließorgans (6) angefahren werden können.

11. Absperrventil nach einem oder mehreren der vorhergehenden Ansprüche **dadurch gekennzeichnet, daß** das Medium in offener Stellung des Ventiles im Wesentlichen durch das Schließorgan (6) geführt wird

12. Absperrventil nach einem oder mehreren der vorhergehenden Ansprüche **dadurch gekennzeichnet, dass** das Medium in offener Stellung des Ventiles im Wesentlichen am Schließorgan (6) vorbei geführt wird und wobei die aus Spulen (2, 8) und den dazu korrespondierenden Ankern (4, 9) bestehenden Antriebe durch Verlängerung des Ventilgehäuses (1) so weit vom wesentlicher Mediumstrom entfernt sind, daß die Mediumstemperatur nur begrenzt auf die Antriebe wirken kann.

13. Absperrventil nach einem oder mehreren der vorhergehenden Ansprüche **dadurch gekennzeichnet, dass** das Schließorgan (6) über eine Verengung verfügt um den Mediumsstrom durch das Schließorgan zusätzlich zu begrenzen.

## Claims

1. Shut-off valve for controllable fluid flow, wherein the valve has a shut-off element (6), which has essentially the shape of a hollow, round tube and which shut-off element (6) is moved axially along the axis of the shut-off element (6) within the valve body (1) for shutting off the medium flow and is pressed at its end against a seat (5) for shutting off the medium flow, so that in the shut-off state of the valve, the pressure difference acts substantially radially on the wall of the tubular shut-off element (6) and wherein the shut-off element (6) is operated directly with a lift drive, which is arranged substantially coaxially around the shut-off element (6) and wherein the lift drive is electromagnetically and directly controlled, **characterised in that** the lift drive consists of at least two anchors (4, 9) and one or more coils (2, 8) corresponding thereto and wherein both the armatures (4, 9) and the coils (2, 8) are arranged substantially coaxially around the shut-off element (6) and wherein the two or more coils (2, 8) can be energised individually with electricity and at least one armature (4, 9) is fixedly connected with the shut-off element (6).

2. Shut-off valve according to the preceding claim, **characterised in that** the different magnets are not of identical design, or that at least the armatures (4, 9) have different lifts within the corresponding coils

3. Shut-off valve according to one or more of the preceding claims, **characterised in that** one or more or all of the armatures (4, 9) is displaceably arranged on the shut-off element (6)

4. Shut-off valve according to one or more of the preceding claims, **characterised in that** one or more of the armatures (4, 9) are limited in their movement along the shut-off element (6) by a driver (10) immovably connected with the shut-off element (6).

5. Shut-off valve according to one or more of the preceding claims, **characterised in that** within the valve more than one spring (7, 12) is mounted, which act directly, or via suitable drivers on the shut-off element (6) along the longitudinal axis thereof.

6. Shut-off valve according to the preceding claim, **characterised in that** the springs (7, 12) act on the shut-off element in the direction of the seat (5).

7. Shut-off valve according to one or more of the preceding claims dependent on Claim 5, **characterised in that** the springs (7, 12) act on the shut-off element in the direction away from the seat (5).

8. Shut-off valve according to one or more of the preceding claims, **characterised in that**, in use, one or more of the coils (2, 8) are disconnected from the flow of current by a time-delay circuit associated with the shut-off valve after a fixed period of time following agitation.

9. Shut-off valve according to one or more of the preceding claims dependent on Claim 5, **characterised in that** the spring(s) (7, 12) is (are) matched to the force of the armature(s) (4, 9), so that the armature (9) corresponding to the spring can overcome the spring force even under the most unfavourable conditions and that this armature (9) has a smaller lift (11) than the maximum lift of the shut-off element (6) and so on agitation of the coil (8) corresponding to the armature (9) an intermediate position of the shut-off element (6) can be accessed.

10. Shut-off valve according to one or more of the preceding claims dependent on Claim 5, **characterised in that** analogous to dependent Claim 9 a plurality of springs (12) are matched to the force of the corresponding armatures (9), so that the armature corresponding to the spring can overcome the spring force of the corresponding spring even under the most unfavourable conditions, and that these armatures (9) have a smaller lift (11) than the maximum lift of the shut-off element (6) and so on agitation of the coils (8) corresponding to the armatures (11) a plurality of intermediate positions on the shut-off element (6) can be accessed.

11. Shut-off valve according to one or more of the preceding claims, **characterised in that** in the open position of the valve the medium is essentially guided through the shut-off element (6).

12. Shut-off valve according to one or more of the preceding claims, **characterised in that** in the open position of the valve
the medium is essentially guided past the shut-off element (6) and wherein the drives consisting of coils (2, 8) and the armatures (4, 9) corresponding thereto are so far removed from the significant medium flow by extension of the valve housing (1), that the medium temperature can act on the drives only to a limited extent.

13. Shut-off valve according to one or more of the preceding claims, **characterised in that** the shut-off element (6) features a constriction in order to additionally limit the medium flow through the shut-off element.

## Revendications

1. Vanne d'arrêt destinée à l'écoulement commandable d'un fluide, la vanne disposant d'un organe de fermeture (6) qui possède sensiblement la forme d'un tube rond creux et lequel organe de fermeture (6), pour l'arrêt du courant de fluide, est coulissé dans le sens axial le long de l'axe de l'organe de fermeture (6) à l'intérieur du corps de vanne (1) puis est compressé du côté frontal contre un siège (5) en vue d'arrêter le courant de fluide, de sorte que dans l'état d'arrêt de la vanne, la différence de pression agit sensiblement dans le sens radial sur la paroi de l'organe de fermeture (6) de forme tubulaire et l'organe de fermeture (6) étant entraîné directement par un mécanisme d'entraînement en course, lequel est disposé de manière sensiblement coaxiale autour de l'organe de fermeture (6) et l'entraînement en course s'effectuant de façon électromagnétique et directement, **caractérisée en ce que** le mécanisme d'entraînement en course se compose d'au moins deux induits (4, 9) et d'une ou de plusieurs bobines (2, 8) correspondant à ceux-ci et les induits (4, 9) ainsi que les bobines (2, 8) sont disposés de manière sensiblement coaxiale autour de l'organe de fermeture (6) et les deux bobines (2, 8) ou plus pouvant être excitées individuellement avec du courant et au moins un induit (4, 9) étant relié à demeure à l'organe de fermeture (6).

2. Vanne d'arrêt selon la revendication précédente, **caractérisée en ce que** les différents aimants ne présentent pas une construction identique ou **en ce qu'**au moins les induits (4, 9) à l'intérieur des bobines correspondantes ont des courses différentes.

3. Vanne d'arrêt selon l'une ou plusieurs des revendications précédentes, **caractérisée en ce qu'**un ou plusieurs ou la totalité des induits (4, 9) sont disposés coulissants sur l'organe de fermeture (6).

4. Vanne d'arrêt selon l'une ou plusieurs des revendications précédentes, **caractérisée en ce qu'**un ou plusieurs des induits (4, 9) sont limités dans leur mouvement le long de l'organe de fermeture (6) par un élément d'entraînement (10) relié de manière intangible avec l'organe de fermeture (6).

5. Vanne d'arrêt selon l'une ou plusieurs des revendications précédentes, **caractérisée en ce que** plus d'un ressort (7, 12) sont posés à l'intérieur de la vanne, lesquelles agissent directement, ou par le biais d'éléments d'entraînement adaptés, sur l'organe de fermeture (6) le long de l'axe longitudinal de celui-ci.

6. Vanne d'arrêt selon la revendication précédente, **caractérisée en ce que** les ressorts (7, 12) agissent sur l'organe de fermeture dans la direction du siège (5) .

7. Vanne d'arrêt selon l'une ou plusieurs des revendications précédentes dépendantes de la revendication 5, **caractérisée en ce que** les ressorts (7, 12) agissent sur l'organe de fermeture dans la direction à l'écart du siège (5).

8. Vanne d'arrêt selon l'une ou plusieurs des revendications précédentes, **caractérisée en ce que** lors de l'utilisation, une ou plusieurs des bobines (2, 8) sont déconnectées de l'arrivée de courant par un circuit de temporisation faisant partie de la vanne d'arrêt après une durée définie après une excitation aboutie.

9. Vanne d'arrêt selon l'une ou plusieurs des revendications précédentes dépendantes de la revendication 5, **caractérisée en ce que** le ou les ressorts (7, 12) sont accordés à la force du ou des induits (4, 9) de telle sorte que l'induit (9) correspondant au ressort peut surmonter la force de ressort même dans des conditions défavorables et **en ce que** cet induit (9) dispose d'une course (11) plus petite que la course maximale de l'organe de fermeture (6) et une position intermédiaire de l'organe de fermeture (6) peut ainsi être atteinte lors de l'excitation de la bobine (8) correspondant à l'induit (9).

10. Vanne d'arrêt selon l'une ou plusieurs des revendications précédentes dépendantes de la revendication 5, **caractérisée en ce que** de manière similaire à la revendication secondaire 9, plusieurs ressorts (12) sont accordés à la force de l'induit (9) de telle sorte que l'induit correspondant au ressort peut surmonter la force de ressort du ressort correspondant même dans des conditions défavorables et **en ce que** ces induits (9) disposent d'une course (11) plus petite que la course maximale de l'organe de fermeture (6) et plusieurs positions intermédiaires de l'organe de fermeture (6) peuvent ainsi être atteintes lors de l'excitation des bobines (8) correspondant aux induits (9).

11. Vanne d'arrêt selon l'une ou plusieurs des revendications précédentes, **caractérisée en ce que** dans la position ouverte de la vanne, le fluide est acheminé sensiblement à travers l'organe de fermeture (6) .

12. Vanne d'arrêt selon l'une ou plusieurs des revendications précédentes, **caractérisée en ce que** dans la position ouverte de la vanne, le fluide est guidé sensiblement à côté de l'organe de fermeture (6) et les mécanismes d'entraînement constitués des bobines (2, 8) et des induits (4, 9) correspondant à celles-ci sont éloignés du courant de fluide principal par une prolongation du corps de vanne (1) de telle sorte que la température du fluide ne peut avoir qu'une action limitée sur les mécanismes d'entraînement.

13. Vanne d'arrêt selon l'une ou plusieurs des revendications précédentes, **caractérisée en ce que** l'organe de fermeture (6) disposé d'un rétrécissement afin de limiter en plus le courant de fluide à travers l'organe de fermeture.
